# EUROPEAN PATENT SPECIFICATION

(11) **EP 4 147 762 B1**
(45) Date of publication and mention of the grant of the patent: **04.11.2026**
(21) Application number: 22193925.9
(22) Date of filing: 05.09.2022
(51) Int. Cl.: B01D 19/00, B01D 19/04

(54) **A METHOD OF DEFOAMING**
ENTSCHÄUMERVERFAHREN
METHODE POUR DEMOUSSER

(30) Priority: 08.09.2021 US 202163260996 P
(43) Date of publication of application: 15.03.2023
(73) Proprietor: Kraton Chemical, LLC, Jacksonville, FL 32256 (US)
(72) Inventor: HEEBNER, Gerry, Houston, Texas 77084 (US); BULANOV, Michael, Houston, Texas 77084 (US); VAN WAES, Patrick, Houston, Texas 77084 (US); KRUTZER, Bert, Houston, Texas 77084 (US)
(74) Representative: Henkel & Partner mbB

(56) References cited:
- EP-A1- 4 015 603
- CA-A1- 2 232 395
- US-A- 4 123 383
- US-A1- 2006 052 462

## Description

### FIELD

The disclosure relates to a method of defoaming a system subject to foaming by using a defoamer composition.

### BACKGROUND

Many industrial formulations require foam free system in various applications. By having foam in such formulations can impact end use products, e.g., defects, inefficient use of containers, low density products, etc. It is desirable to control unwanted foam from formulations using suitable additives. However, the choice of foam control additives needs to have certain properties including the ability to reduce an already formed foam in a short period of time, inhibit formation of foam over an extended period, not to interact with other components, not to affect properties of the formulation, or possess sufficient shelf stability, etc.

Besides affecting product quality, foam problem is also experienced in industrial operations, e.g., polymerizations, paints, papermaking processes, oil drilling and refining operations, food preparation, textile dyeing operations, etc. Foam formation in liquid coolants, hydraulic fluids, lubricants, aviation fuels, and gas absorption systems can cause undesirable results under operating conditions. If not properly controlled, foam can reduce equipment capacity and increase processing time and expense, and in some instances, cause other damages.

Commonly known defoamers are based on petroleum sources. Rosin is a natural raw material which can be modified to obtain useful products. It is desirable to have defoamer compositions that are biobased, and which are effective in controlling unwanted foam formation or reduce already formed foam in the system. US 2006/052462 A1 discloses a method of inhibiting, reducing and/or preventing the presence of foam in a media comprising the step of contacting a) a partial or full dispersion, emulsion, suspension, or sol comprising hydrophobic particles and a continuous phase, wherein the particles comprise from 0.1 to 99.9 wt % of at least one saturated or unsaturated, monocarboxylic aliphatic hydrocarbon or derivative thereof having a linear, branched, and/or cyclic chain of from 8 and 24 carbon atoms, a dimer thereof, a trimer thereof, or mixtures thereof based upon the total weight of the particle; from 0.1 to 99.9 wt % of at least one rosin acid compound selected from the group consisting of natural resin-based acids obtained from residues of distillation of natural oils, amine carboxylates and ester and nitrile compounds of these acids based upon the total weight of the particle; and not more than 60 wt % of unsaponifiable material based upon the total weight of the particle; with b) a partial or full foam comprising water.

### SUMMARY

In one aspect, the disclosure relates to a method of defoaming a system subject to foaming comprising, consisting essentially of, or consists of treating the system with 0.001 to 10 wt.% of a defoamer composition, based on total weight of the system. The defoamer composition comprises: 80 to 100 wt.% of a decarboxylated rosin acid (DCR) having a density of 0.9 to 1.0 g/cm³, a flash point of 135 to 175°C, an acid value of < 50 mg KOH/g, measured according to ASTM D465, and a viscosity of 0.015 to 0.06 Pa.s (15 to 60 cSt) at 40°C, measured according to ASTM D-445; and (b) 0 to 20 wt.% based on total weight of the defoamer composition of at least one component selected from the group consisting of nanoparticles, surfactants, hydrophobic compounds, and mixtures thereof. The defoamer composition reduces a foam content by at least 20 volume % relative to the system without the defoamer composition.

In a second aspect, the DCR comprises: one or more C=C groups; and 40 to 100 wt.% of tricyclic compounds having 18 to 20 carbon atoms, based on total weight of the DCR.

In a third aspect, sum of tricyclic compounds as aromatic and cycloaliphatic in the DCR is > 50 wt.%, based on total weight of the DCR.

In a fourth aspect, an amount of the tricyclic cycloaliphatic compound in the DCR is > 15 wt.%, based on total weight of the DCR.

### DRAWINGS

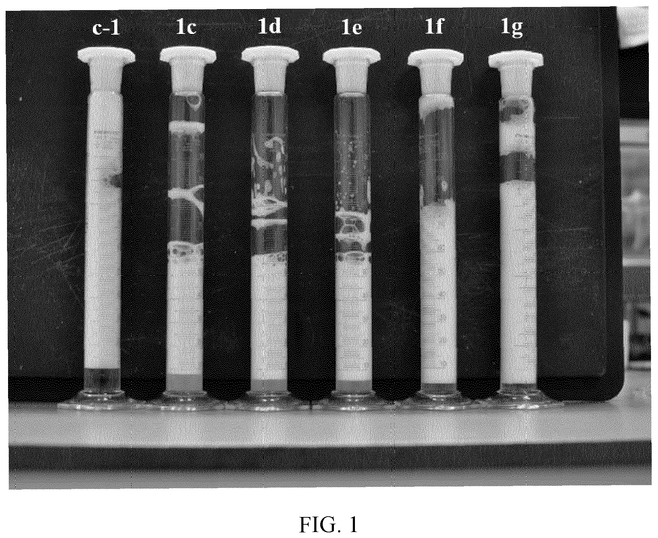

FIG. 1 shows a photograph of tubes containing foaming system with and without addition of the defoamer composition.

### DESCRIPTION

The following terms will be used throughout the specification.

"Foam" refers to a dispersion of gas (usually) air in a liquid or a solid.

"Foaming system" or "system subject to foaming" refers to compositions or media or medium or homogenous / heterogeneous mixtures of ingredients in a liquid form having foam and/or produce foam. It is an undesirable side effect that can occur during manufacturing, filling, or packaging as well as during the application of e.g., paints / coatings.

"Defoamer composition," or "anti-foaming agent" or "air release agent" refers to a product designed to destroy foam after it has been formed (post-defoaming), prevent foam formation (pre-defoaming), or removes (micro-) air bubbles from a liquid and helps them to rise to the surface.

"Solubility Parameter" or (δ) of a solvent or polymer, refers to the square root of the vaporization energy (ΔE) divided by its molar volume (V), as in the equation δ = (ΔE/V)^{1/2} . The more similar the solubility parameters of two substances, the higher will be the solubility between them and hence the expression "like dissolves like." Hansen established that the solubility parameter of a solvent or polymer is the result of the contribution of three types of interactions: dispersion forces (δ_{D}²), polar interactions (δ_{P}²) and hydrogen bonds (δ_{H}²) (Hansen, 2007; Hansen, 1967), with the total solubility (Hildebrand) parameter δT as the result of contribution of each of the three Hansen solubility parameters (HSP) according to: δ_{T} = (δ²_{D} + δ²_{P} + δ²_{H} )^{½}.

The disclosure relates to a method of defoaming a system subject to foaming, comprising treating the system with a defoamer composition containing (a) a decarboxylated rosin acid (DCR), and (b) an optional component selected from the group consisting of nanoparticles, surfactants, hydrophobic compounds, and mixtures thereof.

Decarboxylated Rosin Acid (DCR): The DCR is a rosin-derived composition obtained by decarboxylating a rosin acid, or by dimerizing and decarboxylating a rosin acid and separating / removing the dimerized species. The DCR is in the form of a liquid, and can be any of a crude DCR, a distilled or purified DCR, or mixtures thereof. The DCR can be hydrogenated and/or functionalized. Crude DCR is DCR containing 5 - 25 wt.% of higher molecular weight (450 - 1500 Da) components, e.g., hydrocarbons, oligomers, polymers, impurities, or dimer / trimer of fatty acids. Distilled or purified DCR refers to crude DCR having heavy fractions removed to improve color, reduce sulfur, etc.

DCR is produced by the decomposition of rosin acids at high temperatures, e.g., 220 - 300°C. Rosin acids are normally solid, having a softening point of, e.g., 65 - 85°C. The rosin acid can be fully decarboxylated forming DCR. The rosin acid can be partially decarboxylated, forming DCR, which is a mixture of molecules, some of which contain monocarboxylic acids having a general molecular formula, e.g., C₂₀H₃₀O₂.

In embodiments, the DCR comprises one or more C=C groups, 40 - 100 wt.% of tricyclic compounds having 18 - 20 carbon atoms, 0 - 30 wt.% of components with < 19 carbon atoms, and 40 - 100 wt.% of components with a molecular formula in the range from C₁₉H₂₀ to C₁₉H₃₄, based on total weight of the DCR.

In embodiments, the DCR is characterized as having a m/z (mass/charge) value in the range of 220 - 280, or 230 - 270, or 234 - 262, or 235 - 265, or > 230, or < 265, measured by GC-FID-MS.

In embodiments, the DCR is characterized as having an oxygen content of < 5%, or < 3%, or < 2%, or 0 - 1%. The oxygen content (in %) can be calculated as oxygen to carbon ratio, or the sum of oxygen atoms present divided by the sum of carbon atoms present, with the number of oxygen and carbon atoms being obtained from elemental analyses.

In embodiments, sum of tricyclic compounds as aromatic and cycloaliphatic in the DCR is > 50, or > 55, or > 60, or > 74, or > 90, or up to 100 wt. %, of total weight of the DCR. Aromatic DCR is defined as DCR species having a MW of 252 - 256 g/mol, with MW of 254 g/mol as having a reactive double bond, and cycloaliphatic DCR is defined as DCR species having a MW of 260 or 262 g/mol.

In embodiments, an amount of the tricyclic cycloaliphatic compound is > 15, or > 20, or > 30, or > 40, or > 50, or > 80 wt.%, based on total weight of the DCR.

In embodiments, the total amount of tricyclic compounds having reactive double bond (C=C group) is 1 - 45, or < 40, or < 30, or < 20, or < 15, or < 10 wt.% of total weight of the DCR. Reactive C=C group is defined as DCR species having a MW of 254 or 258 g/mol.

In embodiments, the DCR is characterized as having a lower acid value (carboxylic acid content) than the rosin acid feedstock for making the DCR. In embodiments, the DCR has an acid value of < 50, or < 45, or < 40, or < 35, or < 30, or < 25, or < 20, or < 15, or < 10, or < 7, or < 5, or 0.5 - 40, or 0.5 - 30, or 0.5 - 20, or 1 - 20, or 1 - 15, or 1 - 15, 1 - 10 mg/KOH, as measured using ASTM D1240-14 (2018) or ASTM D465.

In embodiments, the DCR has a density of 0.9 - 1.0, or 0.91 - 0.99, or 0.92 - 0.98, or 0.93 - 0.97, or 0.94 - 0.96, or > 0.9, or < 1.1 g/cm³.

In embodiments, the DCR is characterized as having viscosities comparable to those of petrochemical base oils, due in part to its relatively high molecular weights, for example, a viscosity at 40°C of 0.015 - 0.060, or 0.018 - 0.055, or 0.020 - 0.050, or 0.022 - 0.048, or 0.025 - 0.045, or 0.028 - 0.042, or 0.030 - 0.040, or > 0.020, or > 0.025, or > 0.028, or < 0.045, or < 0.050 Pa.s (15 - 60, 18 - 55, 20 - 50, or 22 - 48, or 25 - 45, or 28 - 42, or 30 - 40, or > 20, or > 25, or > 28, or < 45, or < 50 cSt), measured according to ASTM D-445.

In embodiments, the DCR has an aniline point of 3 - 40°C, or 5 - 40°C, or 5 - 30°C, or 5 - 25°C, or 2 - 20°C, or 5 - 20°C, or 5 - 15°C, or < 25°C, or < 20°C, or > 3°C , or > 5°C, or > 8°C, measured according to ASTM D611.

In embodiments, the DCR has a pour point of -40 to +10°C, or -35 to +8°C, -30 to +5°C, or -30 to +0°C, or -30 to -5°C, or -28 to 0°C or -28 to -5°C, or -28 to -10°C, or > - 30°C, or > -28°C, or < +5°C, measured according to ASTM D97.

In embodiments, the DCR has a flash point of 135 - 175°C, 135 - 165°C, or 135 - 160°C, or 140 - 175°C, or 140 - 160°C, or 140 - 158°C, or 140 - 155°C, or >135°C, or > 140°C, or < 175°C, or < 165°C, or < 160°C, measured according to ASTM D92.

In embodiments, the DCR has a boiling point of 200 - 390°C, or 210 - 390°C, or 235 - 390°C, 280 - 380°C, or 290 - 370°C, 300 - 360°C, or > 290°C, or > 230°C, > 210°C, or < 400°C, or < 370°C, measured according to D2887.

In embodiments, the DCR has a Gardner Color of 0 - 12.0, or 0.5 - 12.0, or 0.8 - 12.0, or 0.9 - 11, or 1.0 - 10.0, or 1.0 - 6.0, or 1.0 - 5, or > 0, or > 1.0, or > 1.2, or < 10.0, or < 7.0, or < 6.0, or <5.0, or < 2.4, or < 3.0, measured according to ASTM D6166.

In embodiments, the DCR has a sulfur content of < 500 ppm (0.05 wt.%), or < 300 ppm (0.03 wt.%), or < 200 ppm (0.02 wt.%), or < 100 ppm (0.01 wt.%), or < 10 ppm (0.001 wt.%), or 20 - 700 ppm (0.002 - 0.7 wt.%), 30 - 500 ppm (0.003 - 0.5 wt.%), or 40 - 400 ppm (0.004 - 0.4 wt.%), or 40 - 300ppm (0.004 - 0.3 wt.%), or 40 - 200 ppm (0.004 - 0.2 wt.%), based on total weight of the DCR, measured according to ASTM D5453.

In embodiments, the DCR has a VOC of < 5, or < 4.75, or < 4.5, or < 4.25, or < 4.0, or < 3.75, or < 3.5, or < 3.25, or < 3.0, or < 2.75, or < 2.5, or < 2.25, or < 2.0, or < 1.5, or < 1.0, or < 0.5 wt.%, based on total weight of the DCR. The VOC of the DCR is measured according to methods: i) summing the percent by weight contribution from all VOCs present in the product at 0.01% or more, or ii) according to the EPA (Environmental Protection Agency) method 24 or equivalent.

In embodiments, the DCR has a Kb (Kauri butanol) value of 25 - 90, or 30 - 85, or 35 - 80, or 40 - 75, or 45 - 70, or 50 - 65, or > 40, or > 50, or > 60, or > 70, or > 80, measured according to ASTM D1133.

In embodiments, the DCR has a viscosity index of < -100, or < -110, or < -115, or < -120, measured according to ASTM D2270. The viscosity index is an arbitrary, unit-less measure of a fluid's change in viscosity relative to temperature change, for example, index of viscosity at 40°C and viscosity at 100°C.

In embodiments, the DCR has a δD value of 14 - 18, or 14.2 - 17.8, or 14.5 - 17.5, or 15 - 17, or 15.2 - 16.5; a δP value of 3 - 6, or 3.2 - 5.5, or 3.4 - 5.2, or 3.5 - 5.0; and δH value of 7 - 10, or 7.5 - 9.5, or 8 - 9, or 8.2 - 8.8.

In embodiments, the DCR has a surface tension of 25 - 50, or 28 - 45, or 30 - 40 dynes/cm, measured according to ASTM D1331.

In embodiments, the defoamer composition includes the DCR in an amount of 80 - 100, or 85 - 99.95, or 90 - 99.90, or 90 - 99.80, or 90 - 99, or 90 - 95 wt.%, based on total weight of the defoamer composition.

Optional Component: In embodiments, the defoamer composition comprises at least one component selected from the group consisting of nanoparticles, surfactants, hydrophobic compounds, and mixtures thereof, in an amount of up to 20 wt.%, or 0 - 20, or 0.5 - 15, or 0.1 - 10, or 1 - 10, or 5 - 10 wt.%, based on total weight of the defoamer composition.

Nanoparticles: In embodiments, the optional component comprises nanoparticles based on silica derived from a silicate, such as an alkali metal silicate or ammonium silicate. Herein, "silica nanoparticles" refer to nanoparticles that include only silica as well as to core-shell nanoparticles with a surface that includes silica. Other non-limiting examples of silica include aerogel silica, silica xerogels, fumed silica, precipitated silica, and mixtures thereof. Silica can be functionalized with silanes or any other functional groups. In embodiments, the defoamer composition comprises other nanoparticles such as zirconium dioxide, aluminum oxide, cerium oxide, tin oxide, titanium dioxide, and mixtures thereof. In embodiments, an average particle size of nanoparticles is in the range of 0.01 -2 µm, or 0.05 - 1 µm, or 0.1 - 0.5 µm, or 0.01 - 0.5 µm.

Surfactants: In embodiments, the optional component is at least a surfactant selected from the group consisting of non-ionic surfactants, anionic surfactants, cationic surfactants, amphoteric surfactants, and mixtures thereof. Examples of non-ionic surfactants include polyoxyethylenelauryl alcohol, polyoxyethylene lauryl ether, polyoxyethylene oleyl ether and other polyoxyethylene higher alcohol ethers, polyoxyethylene octyl phenol, polyoxyethylene nonyl phenol and other polyoxyethylene alkylaryl ethers, polyoxyethylene glycol monostearate and other polyoxyethylene acyl esters, polyoxyethylene stearate, polypropylene glycol ethylene oxide adduct, polyoxyethylene sorbitan monolaurate, sorbitane monostearate, and other polyoxyethylene sorbitan fatty acid esters, alkyl phosphate ester, polyoxyethylene alkyl ether phosphate ester and other phosphate esters, sugar esters and cellulose esters, and mixtures thereof.

Examples of anionic surfactants include sodium oleate, potassium oleate and other fatty acid salts, sodium lauryl sulfate, ammonium lauryl sulfate and other higher alcohol sulfate esters, dodecylbenzene sodium sulfonate, sodium alkyl naphthalene sulfonate and other alkylbenzene sulfonic acid salts and alkyl naphthalene sulfonic acid salts, bis(2-ethylhexyl) sulfosuccinate sodium (AOT), condensed formalin naphthalene sulfonate, dialkyl sulfo succinate salts, dialkyl phosphate salts, sodium polyoxyethylene alkyl phenyl ether sulfate and other polyoxyethylene sulfate salts, and mixtures thereof.

Examples of cationic surfactants include ethanolamines, laurylamine acetate, triethanolamine monoformate, cetyl trimethylammonium bromide (CTAB), stearamide ethyl diethylamine acetate and other amine salts, lauryl trimethyl ammonium chloride, stearyl trimethyl ammonium chloride, dilauryl dimethyl ammonium chloride, distearyl dimethyl ammonium chloride, lauryl dimethylbenzyl ammonium chloride, stearyl dimethylbenzyl ammonium chloride and other quaternary ammonium salts, and mixtures thereof.

Examples of amphoteric surfactants include dimethylalkyl lauryl betaine, dimethyl alkyl stearyl betaine and other fatty acid-based amphoteric surfactants, dimethyl alkyl sulfobetaine and other sulfonic acid-based amphoteric surfactants, and alkyl glycine, and mixtures thereof.

Hydrophobic Compounds: In embodiments, the optional component is a hydrophobic compound selected from but not limited to polyethylene wax, carnauba wax, spermaceti, beeswax, lanolin, vaseline, microcrystalline wax, ceresin, squalene, pristan, polyglycerol fatty acid ester, C₁₄ to C₂₂ alkyl polypentoside, hydrophobic clay, diisopropyl sebacate, octyl isononanoate, isodecyl octanoate, diethylene glycol, isopropyl myristate, isocetyl palmitate, isopropyl isostearate, isocetyl palmitate, isostearyl palmitate, diisostearyl malate, diglyceryl isostearate, diisopropyl dimerate, diglyceryl diisostearate, polyamide particles, silicone oil, and mixtures thereof.

In embodiments, the silicone oil includes but is not limited to polymethyl hydrogen siloxane, amino silicone oil, fluorosilicone oil, phenyl methyl silicone oil, vinyl silicone oil, hydrogen silicone oil, alkoxylated dimethylpolysiloxane, alkyl modified siloxanes, mercapto modified siloxanes, hydroxy modified siloxanes, and mixtures thereof.

Optional Carrier Fluid / Diluent: In embodiments, the defoamer composition further comprises a carrier fluid, diluent, or medium to help improve / increase diffusion ability into the foaming system. In embodiments, the carrier fluid is an inert material that will enhance or at least not interfere, with the DCR in the defoamer composition. Non-limiting examples of a carrier fluid include, mineral oil, vegetable oil, white oil, paraffin oil, polyglycols, polyalkoxylate esters, fuel oil, naphthenic oil, fatty acids, organic solvents, water, sulfonated tall oil, and mixtures thereof.

In embodiments, the carrier fluid is in a liquid form that will remain liquid over a wide temperature range for the type of defoamer composition.

In embodiments, the carrier fluid is added in amounts of 0 - 90, or 5 - 80, or 10 - 70, or 1 - 50, or 5 - 50, or 1 - 20, or 5 - 30 wt.%, based on total weight of the defoamer composition.

Optional Additives: In embodiments, the defoamer composition further comprises at least one additive selected from the group consisting of wax, metallic soaps, unsaponifiable material, freezing point suppressant, cloud point suppressant, diluents, stabilizers, rheology modifiers, metal stearates, biocides, preservatives, extreme pressure (EP) additives, anti-wear additives, corrosion inhibitors, metal deactivators, deodorants, antioxidants, dyes, viscosifiers, polymers, resins, plasticizers, redox couples, fillers, fibers, flame retardants, deaerators, pigments, colorants, flow modifiers, drip retardants, anti-blocking agents, anti-static agents, anti-microbial agents, processing aids, pH control agents, thickening agents, binders, polyacrylate-based surface additive, and mixtures thereof.

In embodiments, the freezing and/or cloud point suppressant are selected from glycols, e.g., polyethylene glycol (PEG), propylene glycol, ethylene glycol, and mixtures thereof.

In embodiments, the pH control agent is selected from potassium chloride, potassium acetate, potassium carbonate, potassium lignite, potassium hydroxide, potassium salt of partially hydrolyzed polyacrylamide (PHPA), and mixtures thereof. Other salts can also be added, e.g., dissolved sodium chloride, calcium chloride, sodium hydroxide, calcium oxide, calcium hydroxide, magnesium oxide, sodium carbonate, and the like.

In embodiments, polymers include polyalkyl vinyl ether copolymers, polyamides, vinylacetate / vinylester copolymers, hydroxyethyl cellulose, ammonium polyacrylate, polysiloxane having a plurality of siloxane groups and at least one tertiary amide group, polyesters, branched-polyesters, hyperbranched polyethylenes, epoxidized ethylene polymers, and mixtures thereof.

In embodiments, optional additives are present in amounts of 0 - 20, or 0.01 - 15, or 0.1 - 10, or 1 - 5 wt.%, based on total weight of the defoamer composition.

Defoamer Composition: In embodiments, the defoamer composition comprises 80 - 100 wt.% of DCR, and up to 20 wt.% of at least one optional component; alternatively, 90 - 99.90 wt. % of DCR, and 0.1 - 10 wt. % of optional component; alternatively, 80 - 99.90 wt. % of DCR, 0.1 - 20 wt.% of optional component(s), based on total weight of the defoamer composition; alternatively, 80 - 99.80 wt.% of DCR, 0.1 - 10 wt.% of nanoparticles, and 0.1 - 10 wt.% of surfactant(s), based on total weight of the defoamer composition.

Method of Preparation: The defoamer composition can be in aqueous or non-aqueous liquid form, as a continuous phase or a discontinuous phase, e.g., as suspension, dispersion, emulsion, solution, or sol. The composition can be prepared by known methods, e.g., mixing all components by simple stirring or with static mixers, or by employing high shearing forces in colloid mills, dissolvers, rotor-stator homogenizers, and the like.

Properties of Defoamer Composition: The defoamer composition exhibits excellent defoaming characteristics, e.g., eliminating the existing foam, and/or preventing the formation of further foam. In embodiments, the defoamer composition possesses long shelf life, improves diffusion ability in the foaming system, reduces surface tension of the foaming system, is compatible with various foaming system, and is easily spreadable on the foamy surface.

In embodiments, the defoamer composition has an acid value of 0 - 10, 0.1 - 10, or 0.1 - 9, or 0.5 - 8.5, or 0.75 - 7.5, or 1 - 6.5, or 1.2 - 6, or 1.4 - 5.5, or > 0.2, or < 6 mg KOH/g.

In embodiments, the defoamer composition in defoaming applications, reduces the foam content by > 20, or > 25, or > 30, or > 40, to > 50, or > 70 or > 80, or up to 100 volume % of foam, relative to a foaming system without the defoamer composition.

Applications of Defoamer Composition: The composition can be used in any of aqueous and non-aqueous systems (e.g., tar distillation, petroleum processing, etc.), where foam formation should be suppressed, reduced, or avoided for processing or product finish reasons. Examples include finishing baths for textile materials, fiber suspensions in paper manufacture, paper coating compositions, paints, coatings, water-borne adhesives, inks, polymer latexes, food processing, metalworking fluids, wastewater plants, in the scrubbing of natural gas, mining industry, textiles, agriculture, medical and pharmaceutical industries, plastics recycling, cement manufacturing, or fertilizer production.

In embodiments, the defoamer composition when added into paints / coatings (e.g., waterborne, solvent-borne, etc.), helps minimize or eliminate the foam effect and improve the coating appearance. Additionally, the durability of coating can be improved due to the elimination of the foam, and the surface of the coating can have a lower propensity for dirt pickup and free of defects, e.g., craters or foam marks.

Method of Defoaming: A system subject to foaming can be treated by adding to the system 0.001 - 10, or 0.005 - 5, or 0.01 - 2, or 0.1 - 5 wt.% of the defoamer composition, based on total weight of the system. In embodiments, the defoamer composition is first added to a liquid surfactant in an amount of 0.01 - 5, or 0.05 - 4, or 0.1 - 2 wt.%, based on total weight of the surfactant. The surfactant is then diluted to the required amount and added to the system to minimize or prevent foam formation in the system.

In embodiments, the foaming system is heated to a temperature of 10 - 100°C, or 15 - 90°C, or 20 - 80°C, or 25 - 70°C, before or after addition of the defoamer composition.

### Examples: The following illustrative examples are non-limiting.

### Materials used in examples include:

Silica particles (Aerosil R974) from Evonik.

Surfactants: Bis(2-ethylhexyl) sulfosuccinate sodium (AOT), cetyl trimethylammonium bromide (CTAB), polyoxyethylene stearate, and sorbitane monostearate.

Silicone oil with viscosity of 1 Pa.s (1000 cSt) from Sigma Aldrich.

DCR samples are from Kraton Corporation with properties as shown in Table 1. The DCR samples also have the followings for DCR-I, DCR-II, and DCR-III respectively: % O₂ of 0.39 (no value for DCR-II and DCR-III); % tricyclic compounds of 77.7, (none for DCR-II and DCR-III); % aromatic MW 252 of 14 and 12, (no value for DCR-III); reactive double bond MW 254 of 0.5, and 4, (no value for DCR-III); aromatic MW 256 of 45.3, and 29, (no value for DCR-III); reactive double bond MW 258 of 0.8, and 1, (no value for DCR-III); cycloaliphatic MW 260 of 0.3, and 10, (no value for DCR-III); cycloaliphatic MW 262 of 8 for DCR-II, (no value for DCR-I and DCR-III).

**Table 1. Properties of DCRs**

| Property | DCR-I | DCR-II | DCR-III |
|---|---|---|---|
| Acid Value (mg KOH/g) | 7.2 | 1.3 | 1.3 |
| Gardner Color | 10.5 | 5.6 | 0.9 |
| Kinematic Viscosity at 40°C (Pa.s) (cSt) | 0.04759 (47.59) | 0.03283 (31.83) | - |
| Kinematic Viscosity at 100°C (Pa.s) (cSt) | 0.00468 (4.68) | 0.00370 (3.70) | - |
| Viscosity Index | -136 | -199 | - |
| Pour Point (°C) | -14 | -21 | - |
| Aniline Point (°C) | - | 6 | - |
| Flash point (°C) | 140°C | - | 144 |
| Boiling point (°C) | 235 - 360°C | 235 - 360°C | - |
| Dispersion forces (δD) | 16.4 | 15.8 | - |
| Polar interactions (δP) | 3.6 | 4.9 | - |
| Hydrogen bonds (δH) | 8.5 | 8.5 | - |
| Density at 20°C (g/cm³) | 0.9630 | 0.9655 | - |
| Surface Tension (dynes/cm) | 34.46 | 34.35 | - |
| Sulfur content (wt.%) | < 0.03 | - | - |

Example 1: Defoamer compositions were prepared by mixing silica particles into DCRs in different amounts as in Table 2.

Example 2: Defoamer compositions were prepared by mixing silicone oil into DCRs in different amounts as in Table 2.

**Table 2.**

| Components in defoamer compositions | DCR-I (wt.%) | DCR-II (wt.%) | DCR-III (wt.%) | Silica (wt.%) | Silicone oil (wt.%) |
|---|---|---|---|---|---|
| Ex. 1a | 99.9 | - | - | 0.1 | - |
| Ex. 1b | 99.8 | - | - | 0.2 | - |
| Ex. 1c | 99.5 | - | - | 0.5 | - |
| Ex. 1d | 99 | - | - | 1 | - |
| Ex. 1e | 98.1 | - | - | 1.9 | - |
| Ex. 1f | 96.2 | - | - | 3.8 | - |
| Ex. 1g | 94.4 | - | - | 5.6 | - |
| Ex. 1h | 96 | - | - | 4 | - |
| Ex. 1i | - | 96 | - | 4 | - |
| Ex. 1j | - | - | 96 | 4 | - |
| Ex. 2a | 90 | - | - | - | 10 |
| Ex. 2b | 80 | - | - | - | 20 |
| Ex. 2c | 70 | - | - | - | 30 |
| Ex. 2d | 0 | - | - | - | 100 |

Example 3: A surfactant solution was prepared by adding 2 grams of polyoxyethylene stearate and 2 grams of sorbitane monostearate in 100 grams of deionized (DI) water. Defoamer compositions in the form of emulsions were prepared by separately mixing 8 grams of the surfactant solution with 3 grams of each of the defoamer composition of examples 1h, 1i, and 1j to obtain compositions 3h, 3i, and 3j.

Example 4: Effect of defoamer compositions was evaluated as follows. 15 grams of bis(2-ethylhexyl) sulfosuccinate sodium (AOT) or 20 grams of cetyl trimethylammonium bromide (CTAB) in water with the concentration of 10 mM, termed as a surfactant solution, was added to a 100 ml graduated cylinder. Cylinder was fully filled with foam by shaking the cylinder manually and the foam height was measured. After 1 minute, a first photograph was taken to observe stability of the foam in the cylinder (control photograph). Different amounts of the defoamer composition were added to cylinders and cylinders were shaken again to see the effect of the defoamer composition on the foam generation, the foam height was recorded at this stage. Photograph of cylinders was captured with and without addition of the defoamer composition and shown in FIG. 1.

In the figure, cylinder c-1 is the foaming system without the defoamer composition. Cylinders 1c to 1g depict foam reduction in the foaming system as a result of the addition of defoamer compositions of examples 1c to 1g, in amounts of 0.24 wt.%, 0.17 wt. %, 0.23 wt.%, 0.24 wt.%, and 0.27 wt.%, respectively, based on total weight of the surfactant solution.

Tables 3 and 4 show differences in foam height in the cylinder before and after addition of the defoamer composition (after 1 minute). Table 5 presents foam height measurements as a function of time.

**Table 3.**

| Examples | Amount of DCR (wt.%) | Surfactant solution made from surfactant (for defoamer test): | Foam height (in %) |
|---|---|---|---|
| Control (c-1) | 0 | AOT | 100 |
| Olive oil | 0.23 | AOT | 100 |
| DCR-I | 0.24 | AOT | 96 |
| DCR-II | 0.34 | AOT | 100 |
| DCR-III | 0.22 | AOT | 40 |
| Control (c-2) | 0 | CTAB | 100 |
| Olive oil | 0.24 | CTAB | 100 |
| DCR-I | 0.14 | CTAB | 73 |
| DCR-II | 0.27 | CTAB | 42 |
| DCR-III | 0.50 | CTAB | 45 |

**Table 4.**

| Examples | Amount of defoamer composition added in surfactant solution (wt.%) | Surfactant solution made from surfactant (for defoaming test): | Foam height (in %) |
|---|---|---|---|
| Control (c-1) | 0 | AOT | 100 |
| Ex. 1a | 0.29 | AOT | 43 |
| Ex. 1b | 0.24 | AOT | 39 |
| Ex. 1c | 0.24 | AOT | 51 |
| Ex. 1d | 0.17 | AOT | 42 |
| Ex. 1e | 0.23 | AOT | 41 |
| Ex. 1f | 0.24 | AOT | 57 |
| Ex. 1g | 0.27 | AOT | 64 |
| Ex. 2a-AOT | 0.28 | AOT | 46 |
| Ex. 2b-AOT | 0.19 | AOT | 59 |
| Ex. 2c-AOT | 0.35 | AOT | 38 |
| Ex. 2d-AOT | 0.31 | AOT | 98 |
| Ex. 2a-CTAB | 0.17 | CTAB | 39 |
| Ex. 2b-CTAB | 0.26 | CTAB | 30 |
| Ex. 2c-CTAB | 0.14 | CTAB | 36 |
| Ex. 2d-CTAB | 0.39 | CTAB | 55 |

**Table 5.**

| | | Ex. 3h | Ex. 3i | Ex. 3j |
|---|---|---|---|---|
| Amount of defoamer composition added in surfactant solution (wt.%) | | 0.26 | 0.29 | 0.25 |
| Surfactant solution made from surfactant (for defoamer test): | | AOT | AOT | AOT |
| Foam height (in %) measured after time t (min.): | t = 0 | 100 | 100 | 100 |
| | t = 1 | 78 | 83 | 73 |
| | t = 2 | 69 | 72 | 68 |
| | t = 3 | 65 | 69 | 64 |
| | t = 4 | 62 | 64 | 56 |
| | t = 5 | 38 | 40 | 49 |

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A method of defoaming a system subject to foaming, comprising:
treating the system with 0.001 to 10 wt.% of a defoamer composition, based on total weight of the system;
wherein the defoamer composition comprises:
(a) 80 to 100 wt.% of a decarboxylated rosin acid (DCR) having a density of 0.9 to 1.0 g/cm³, a flash point of 135 to 175°C, an acid value of < 50 mg KOH/g, measured according to ASTM D465, and a viscosity of 0.015 to 0.06 Pa·s (15 to 60 cSt) at 40°C, measured according to ASTM D-445; and
(b) 0 to 20 wt.% based on total weight of the defoamer composition of at least a component selected from the group consisting of nanoparticles, surfactants, hydrophobic compounds, and mixtures thereof; and
wherein the defoamer composition reduces a foam content by at least 20 volume % relative to the system without the defoamer composition.

2. The method of claim 1, wherein the DCR comprises: one or more C=C groups; and 40 to 100 wt.% of tricyclic compounds having 18 to 20 carbon atoms, based on total weight of the DCR.

3. The method of claim 2, wherein sum of tricyclic compounds as aromatic and cycloaliphatic in the DCR is > 50 wt.%, based on total weight of the DCR.

4. The method of claim 2, wherein the DCR comprises tricyclic cycloaliphatic compounds in an amount of > 15 wt.%, based on total weight of the DCR.

5. The method of any of claims 1-4, wherein the nanoparticle is selected from the group consisting of silica, zirconium dioxide, aluminum oxide, cerium oxide, tin oxide, titanium dioxide, and mixtures thereof.

6. The method of any of claims 1-4, wherein the surfactant is selected from the group consisting of anionic, cationic, non-ionic, amphoteric, and mixtures thereof.

7. The method of any of claims 1-4, wherein the hydrophobic compound is selected from the group consisting of polyethylene wax, carnauba wax, spermaceti, beeswax, lanolin, vaseline, microcrystalline wax, ceresin, squalene, pristan, polyglycerol fatty acid ester, C₁₄ to C₂₂ alkyl polypentoside, hydrophobic clay, diisopropyl sebacate, octyl isononanoate, isodecyl octanoate, diethylene glycol, isopropyl myristate, isocetyl palmitate, isopropyl isostearate, isocetyl palmitate, isostearyl palmitate, diisostearyl malate, diglyceryl isostearate, diisopropyl dimerate, diglyceryl diisostearate, polyamide particles, silicone oil, and mixtures thereof.

8. The method of any of claims 1-4, wherein the DCR has at least one of: a density of 0.92 to 0.98 g/cm³; an acid value of 0.4 to 40 mg KOH/g; a flash point of 140 to 175°C; and a viscosity of 0.02 to 0.05 Pa·s (20 to 50 cSt) at 40°C, measured according to ASTM D-445.

9. The method of any of claims 1-4, wherein the DCR has at least one of: an aniline point of 3 to 40°C, measured according to ASTM D611; a pour point of -40 to +10°C, measured according to ASTM D97; and a boiling point of 200 to 390°C, measured according to D2887.

10. The method of any of claims 1-4, wherein the DCR has at least one of: a Gardner Color of 0 to 12.0, measured according to ASTM D6166; a sulfur content of < 0.05 wt.%, measured according to ASTM D5453; and a surface tension of 25 to 50 dynes/cm, measured according to ASTM D1331.

11. The method of any of claims 1-4, wherein the DCR has a volatile organic content (VOC) of < 5 wt.%.

12. The method of any of claims 1-4, wherein the defoamer composition comprises: 90 to 99.90 wt.% of the DCR, and 0.1 to 10 wt.% of at least one component selected from the group consisting of nanoparticles, surfactants, hydrophobic compounds, and mixtures thereof, based on total weight of the defoamer composition; and wherein the defoamer composition is in the form of suspension, dispersion, emulsion, solution, or sol.

13. The method of any of claims 1-4, wherein the at least a component comprises nanoparticles and surfactants, and wherein the defoamer composition comprises: 80 to 99.80 wt.% of the DCR, 0.1 to 10 wt.% of the nanoparticles, and 0.1 to 10 wt.% of the surfactants, based on total weight of the defoamer composition.

14. The method of any of claims 1-4, wherein the defoamer composition further comprises at least one additive selected from the group consisting of metallic soaps, unsaponifiable material, freezing point suppressant, cloud point suppressant, diluents, stabilizers, rheology modifiers, metal stearates, biocides, preservatives, extreme pressure (EP) additives, anti-wear additives, corrosion inhibitors, metal deactivators, deodorants, antioxidants, dyes, viscosifiers, polymers, resins, plasticizers, redox couples, fillers, fibers, flame retardants, deaerators, pigments, colorants, flow modifiers, drip retardants, anti-blocking agents, anti-static agents, anti-microbial agents, processing aids, pH control agents, thickening agents, binders, and mixtures thereof.

15. The method of any of claims 1-4, wherein the system subject to foaming is selected from the group consisting of finishing baths for textile materials, fiber suspensions in paper manufacture, paper coating compositions, paints, coatings, water-borne adhesives, inks, polymer latexes, metalworking fluids, and wastewater plants.

## Patentansprüche

1. Verfahren zur Entschäumung eines der Schaumbildung unterliegenden Systems, umfassend:
Behandeln des Systems mit 0,001 bis 10 Gew.-% einer Entschäumerzusammensetzung, bezogen auf das Gesamtgewicht des Systems;
wobei die Entschäumerzusammensetzung umfasst:
(a) 80 bis 100 Gew.-% einer decarboxylierten Harzsäure (DCR) mit einer Dichte von 0,9 bis 1,0 g/cm³, einem Flammpunkt von 135 bis 175°C, einer Säurezahl von < 50 mg KOH/g, gemessen gemäß ASTM D465, und einer Viskosität von 0,015 bis 0,06 Pa·s (15 bis 60 cSt) bei 40°C, gemessen gemäß ASTM D-445; und
(b) 0 bis 20 Gew.-%, bezogen auf das Gesamtgewicht der Entschäumerzusammensetzung, zumindest einer Komponente, die aus der Gruppe ausgewählt ist, die aus Nanopartikeln, Tensiden, hydrophoben Verbindungen und Gemischen davon besteht; und
wobei die Entschäumerzusammensetzung den Schaumgehalt gegenüber dem System ohne die Entschäumerzusammensetzung um zumindest 20 Vol.-% reduziert.

2. Verfahren nach Anspruch 1, wobei die DCR umfasst:
eine oder mehrere C=C-Gruppen; und 40 bis 100 Gew.-% tricyclische Verbindungen mit 18 bis 20 Kohlenstoffatomen, bezogen auf das Gesamtgewicht der DCR.

3. Verfahren nach Anspruch 2, wobei die Summe der tricyclischen Verbindungen als aromatische und cycloaliphatische Verbindungen in der DCR > 50 Gew.-%, bezogen auf das Gesamtgewicht der DCR, beträgt.

4. Verfahren nach Anspruch 2, wobei die DCR tricyclische cycloaliphatische Verbindungen in einer Menge von > 15 Gew.-%, bezogen auf das Gesamtgewicht der DCR, umfasst.

5. Verfahren nach einem der Ansprüche 1 bis 4, wobei das Nanopartikel aus der Gruppe ausgewählt ist, die aus Siliciumdioxid, Zirkoniumdioxid, Aluminiumoxid, Ceroxid, Zinnoxid, Titandioxid und Gemischen davon besteht.

6. Verfahren nach einem der Ansprüche 1 bis 4, wobei das Tensid aus der Gruppe ausgewählt ist, die aus anionischen, kationischen, nichtionischen, amphoteren Tensiden und Gemischen davon besteht.

7. Verfahren nach einem der Ansprüche 1 bis 4, wobei die hydrophobe Verbindung aus der Gruppe ausgewählt ist, die aus Polyethylenwachs, Carnaubawachs, Spermazet, Bienenwachs, Lanolin, Vaseline, mikrokristallinem Wachs, Ceresin, Squalen, Pristan, Polyglycerinfettsäureester, C₁-C₂₂-Alkylpolypentosid, hydrophobem Ton, Diisopropylsebacat, Octylisononanoat, Isodecyloctanoat, Diethylenglykol, Isopropylmyristat, Isocetylpalmitat, Isopropylisostearat, Isocetylpalmitat, Isostearylpalmitat, Diisostearylmalat, Diglycerylisostearat, Diisopropyldimerat, Diglyceryldiisostearat, Polyamidpartikeln, Silikonöl und Gemischen davon besteht.

8. Verfahren nach einem der Ansprüche 1 bis 4, wobei die DCR zumindest eines aufweist von: einer Dichte von 0,92 bis 0,98 g/ cm³; einer Säurezahl von 0,4 bis 40 mg KOH/g; einem Flammpunkt von 140 bis 175°C; und einer Viskosität von 0,02 bis 0,05 Pa·s (20 bis 50 cSt) bei 40°C, gemessen gemäß ASTM D-445.

9. Verfahren nach einem der Ansprüche 1 bis 4, wobei die DCR zumindest eines aufweist von: einem Anilinpunkt von 3 bis 40°C, gemessen gemäß ASTM D611; einem Pourpunkt von -40 bis +10°C, gemessen gemäß ASTM D97; und einem Siedepunkt von 200 bis 390°C, gemessen gemäß D2887.

10. Verfahren nach einem der Ansprüche 1 bis 4, wobei die DCR zumindest eines aufweist von: einer Gardner-Farbe von 0 bis 12,0, gemessen gemäß ASTM D6166; einem Schwefelgehalt von < 0,05 Gew.-%, gemessen gemäß ASTM D5453; und einer Oberflächenspannung von 25 bis 50 dyn/cm, gemessen gemäß ASTM D1331.

11. Verfahren nach einem der Ansprüche 1 bis 4, wobei die DCR einen Gehalt an flüchtigen organischen Verbindungen (VOC) von < 5 Gew.-% aufweist.

12. Verfahren nach einem der Ansprüche 1 bis 4, wobei die Entschäumerzusammensetzung umfasst: 90 bis 99,90 Gew.-% der DCR und 0,1 bis 10 Gew.-% zumindest einer Komponente, die aus der Gruppe ausgewählt ist, die aus Nanopartikeln, Tensiden, hydrophoben Verbindungen und Gemischen davon besteht, bezogen auf das Gesamtgewicht der Entschäumerzusammensetzung; und wobei die Entschäumerzusammensetzung in Form einer Suspension, Dispersion, Emulsion, Lösung oder eines Sols vorliegt.

13. Verfahren nach einem der Ansprüche 1 bis 4, wobei die zumindest eine Komponente Nanopartikel und Tenside umfasst, und wobei die Entschäumerzusammensetzung umfasst: 80 bis 99,80 Gew.-% der DCR, 0,1 bis 10 Gew.-% der Nanopartikel und 0,1 bis 10 Gew.-% der Tenside, bezogen auf das Gesamtgewicht der Entschäumerzusammensetzung.

14. Verfahren nach einem der Ansprüche 1 bis 4, wobei die Entschäumerzusammensetzung weiterhin zumindest ein Additiv umfasst, das aus der Gruppe ausgewählt ist, die aus Metallseifen, unverseifbarem Material, einem Gefrierpunkterniedriger, einem Trübungspunkterniedriger, Verdünnungsmitteln, Stabilisatoren, Rheologiemodifikatoren, Metallstearaten, Bioziden, Konservierungsmitteln, Extremdruck-(EP-)Additiven, Verschleißschutzadditiven, Korrosionsinhibitoren, Metalldeaktivatoren, Desodorierungsmitteln, Antioxidantien, Farbstoffen, Viskositätsmitteln, Polymeren, Harzen, Weichmachern, Redoxpaaren, Füllstoffen, Fasern, Flammschutzmitteln, Entlüftern, Pigmenten, Farbstoffen, Fließmodifikatoren, Tropfschutzmitteln, Antiblockiermitteln, Antistatika, antimikrobiellen Mitteln, Verarbeitungshilfsmitteln, pH-Kontrollmitteln, Verdickungsmitteln, Bindemitteln und Gemischen davon besteht.

15. Verfahren nach einem der Ansprüche 1 bis 4, wobei das der Schaumbildung unterliegende System aus der Gruppe ausgewählt ist, die aus Veredelungsbädern für Textilmaterialien, Fasersuspensionen bei der Papierherstellung, Papierbeschichtungszusammensetzungen, Farben, Beschichtungen, wasserbasierten Klebstoffen, Druckfarben, Polymerlatizes, Metallbearbeitungsflüssigkeiten und Abwasseranlagen besteht.

## Revendications

1. Procédé de démoussage d'un système sujet au moussage, comprenant :
le traitement du système avec 0,001 à 10 % en poids d'une composition antimousse, par rapport au poids total du système ;
dans lequel la composition antimousse comprend :
(a) 80 à 100 % en poids d'un acide de colophane décarboxylé (DCR) ayant une masse volumique de 0,9 à 1,0 g/cm³, un point d'éclair de 135 à 175 °C, un indice d'acide < 50 mg KOH/g, mesuré selon ASTM D465, et une viscosité de 0,015 à 0,06 Pa·s (15 à 60 cSt) à 40 °C, mesurée selon ASTM D-445 ; et
(b) 0 à 20 % en poids, par rapport au poids total de la composition antimousse, d'au moins un composant choisi dans le groupe constitué par les nanoparticules, les tensioactifs, les composés hydrophobes et leurs mélanges ; et
dans lequel la composition antimousse réduit une teneur en mousse d'au moins 20 % en volume par rapport au système sans la composition antimousse.

2. Procédé selon la revendication 1, dans lequel le DCR comprend : un ou plusieurs groupes C=C ; et 40 à 100 % en poids de composés tricycliques ayant 18 à 20 atomes de carbone, par rapport au poids total du DCR.

3. Procédé selon la revendication 2, dans lequel la somme des composés tricycliques aromatiques et cycloaliphatiques dans le DCR est > 50 % en poids, par rapport au poids total du DCR.

4. Procédé selon la revendication 2, dans lequel le DCR comprend des composés cycloaliphatiques tricycliques en une quantité > 15 % en poids, par rapport au poids total du DCR.

5. Procédé selon l'une quelconque des revendications 1 à 4, dans lequel la nanoparticule est choisie dans le groupe constitué par la silice, le dioxyde de zirconium, l'oxyde d'aluminium, l'oxyde de cérium, l'oxyde d'étain, le dioxyde de titane et leurs mélanges.

6. Procédé selon l'une quelconque des revendications 1 à 4, dans lequel le tensioactif est choisi dans le groupe constitué par les tensioactifs anioniques, cationiques, non ioniques et amphotères, et leurs mélanges.

7. Procédé selon l'une quelconque des revendications 1 à 4, dans lequel le composé hydrophobe est choisi dans le groupe constitué par la cire de polyéthylène, la cire de carnauba, le spermaceti, la cire d'abeille, la lanoline, la vaseline, la cire microcristalline, la cérésine, le squalène, le pristane, l'ester d'acide gras de polyglycérol, le polypentoside d'alkyle en C₁₄ à C₂₂, l'argile hydrophobe, le sébaçate de diisopropyle, l'isononanoate d'octyle, l'octanoate d'isodécyle, le diéthylène glycol, le myristate d'isopropyle, le palmitate d'isocétyle, l'isostéarate d'isopropyle, le palmitate d'isocétyle, le palmitate d'isostéaryle, le malate de diisostéaryle, l'isostéarate de diglycéryle, le dimérate de diisopropyle, le diisostéarate de diglycéryle, les particules de polyamide, l'huile de silicone et leurs mélanges.

8. Procédé selon l'une quelconque des revendications 1 à 4, dans lequel le DCR présente au moins l'une des caractéristiques suivantes : une masse volumique de 0,92 à 0,98 g/cm³ ; un indice d'acide de 0,4 à 40 mg KOH/g ; un point d'éclair de 140 à 175 °C ; et une viscosité de 0,02 à 0,05 Pa·s (20 à 50 cSt) à 40 °C, mesurée selon ASTM D-445.

9. Procédé selon l'une quelconque des revendications 1 à 4, dans lequel le DCR présente au moins l'une des caractéristiques suivantes : un point d'aniline de 3 à 40 °C, mesuré selon ASTM D611 ; un point d'écoulement de -40 à +10 °C, mesuré selon ASTM D97 ; et un point d'ébullition de 200 à 390 °C, mesuré selon D2887.

10. Procédé selon l'une quelconque des revendications 1 à 4, dans lequel le DCR présente au moins l'une des caractéristiques suivantes : une couleur Gardner de 0 à 12,0, mesurée selon ASTM D6166 ; une teneur en soufre < 0,05 % en poids, mesurée selon ASTM D5453 ; et une tension superficielle de 25 à 50 dynes/cm, mesurée selon ASTM D1331.

11. Procédé selon l'une quelconque des revendications 1 à 4, dans lequel le DCR présente une teneur en composés organiques volatils (COV) < 5 % en poids.

12. Procédé selon l'une quelconque des revendications 1 à 4, dans lequel la composition antimousse comprend : 90 à 99,90 % en poids du DCR, et 0,1 à 10 % en poids d'au moins un composant choisi dans le groupe constitué par les nanoparticules, les tensioactifs, les composés hydrophobes et leurs mélanges, par rapport au poids total de la composition antimousse ; et dans lequel la composition antimousse se présente sous la forme d'une suspension, d'une dispersion, d'une émulsion, d'une solution ou d'un sol.

13. Procédé selon l'une quelconque des revendications 1 à 4, dans lequel l'au moins un composant comprend des nanoparticules et des tensioactifs, et dans lequel la composition antimousse comprend : 80 à 99,80 % en poids du DCR, 0,1 à 10 % en poids des nanoparticules, et 0,1 à 10 % en poids des tensioactifs, par rapport au poids total de la composition antimousse.

14. Procédé selon l'une quelconque des revendications 1 à 4, dans lequel la composition antimousse comprend en outre au moins un additif choisi dans le groupe constitué par les savons métalliques, la matière insaponifiable, un agent abaissant le point de congélation, un agent abaissant le point de trouble, les diluants, les stabilisants, les modificateurs de rhéologie, les stéarates métalliques, les biocides, les conservateurs, les additifs extrême pression (EP), les additifs anti-usure, les inhibiteurs de corrosion, les désactivateurs de métaux, les déodorants, les antioxydants, les colorants, les agents viscosifiants, les polymères, les résines, les plastifiants, les couples redox, les charges, les fibres, les agents ignifuges, les désaérateurs, les pigments, les matières colorantes, les modificateurs d'écoulement, les agents anti-goutte, les agents antiblocage, les agents antistatiques, les agents antimicrobiens, les auxiliaires de mise en œuvre, les agents de contrôle du pH, les agents épaississants, les liants et leurs mélanges.

15. Procédé selon l'une quelconque des revendications 1 à 4, dans lequel le système sujet au moussage est choisi dans le groupe constitué par les bains de finition pour matériaux textiles, les suspensions de fibres dans la fabrication du papier, les compositions de couchage du papier, les peintures, les revêtements, les adhésifs à base aqueuse, les encres, les latex de polymère, les fluides de travail des métaux et les stations d'épuration des eaux usées.
